# EUROPEAN PATENT APPLICATION

(11) **EP 4 699 921 A1**
(43) Date of publication of application: **25.02.2026**
(21) Application number: 25800688.1
(22) Date of filing: 10.04.2025
(51) Int. Cl.: B63B 79/40, B63B 79/10, B63B 79/30, B63B 49/00, B63H 21/21, B63B 79/20, B63B 43/18

(54) **METHOD AND DEVICE FOR OPTIMIZING RPM OF SHIP FOR FIXED ROUTE**

(30) Priority: 08.05.2024 KR 20240060789; 26.12.2024 KR 20240197315
(71) Applicant: Avikus Co., Ltd., Seoul 06234 (KR)
(72) Inventor: CHOI, Gwanghyeok, Seoul 06234 (KR); CHOI, Hwi Yong, Seoul 06234 (KR); OH, Jinyoung, Seoul 06234 (KR)
(74) Representative: Zacco Sweden AB
(86) International application number: PCT/KR2025/004871
(87) International publication number: WO 2025/234623

(57) **Abstract**

An embodiment of the present disclosure provides a method of optimizing revolutions per minute (RPM) of a ship when the ship navigates each point of a route while the route is fixed, and a device for implementing the method.

## Description

### Technical Field

The present disclosure relates to a method of optimizing revolutions per minute (RPM) of a ship, and more particularly, to a method of optimizing RPM of a ship while a departure point, a transit point, and an arrival point of the ship are all fixed, and a device for implementing the method.

### Background Art

Technology which corrects a route of a ship according to route conditions, such as weather, sea currents, and wave height, is very important for improving the safety and efficiency of the ship. Technology which corrects a route may monitor and analyze weather conditions in real time and suggest optimized routes, thereby reducing fuel consumption, predicting arrival time, and ensuring safe navigation.

To this end, it is necessary to collect and analyze weather data corresponding to the ship's position in real time, but the volume of weather data is so large that it is difficult to transmit and receive weather data to and from a terrestrial server by using satellite communication alone. Therefore, there is a need for technology which corrects a route of a ship by deriving an optimized RPM of the ship by using weak satellite communication alone.

### Disclosure of Invention

### Technical Problem

The technical problem to be solved by the present disclosure is to provide a method of optimizing revolutions per minute (RPM) of a ship on a fixed route and a device for implementing the method.

### Solution to Problem

To solve the technical problems, a method according to an embodiment of the present disclosure includes: receiving input data including at least one of a route of the ship, sensor data of the ship, and weather data corresponding to a position where the ship is navigating on the route of the ship; dividing the route into a plurality of optimization points including a departure point, at least one transit point, and an arrival point; and calculating, based on the input data, an optimized revolutions per minute (RPM) when the ship moves from a first optimization point to a second optimization point where the ship is to move immediately after the first optimization point.

To solve the technical problems, a device according to another embodiment of the present disclosure may include: a memory in which at least one program is stored; and a processor configured to execute the at least one program to perform an operation, wherein the processor may be further configured to receive input data including at least one of a route of the ship, sensor data of the ship, and weather data corresponding to a position where the ship is navigating on the route of the ship, divide the route into a plurality of optimization points including a departure point, at least one transit point, and an arrival point, and repeatedly calculate, based on the input data, an optimized RPM when the ship moves from a first optimization point where the ship is currently located to a second optimization point where the ship is to move immediately after the first optimization point.

To solve the technical problem, a method according to another embodiment of the present disclosure may include: receiving input data including at least one of a route of the ship, sensor data of the ship, and weather data corresponding to a position where the ship is navigating on the route of the ship; dividing the route into a plurality of optimization points including a departure point, at least one transit point, and an arrival point; calculating, based on the input data, a first optimized RPM when the ship moves from a first optimization point where the ship is currently located to a second optimization point where the ship is to move immediately after the first optimization point; and calculating, based on the first optimized RPM and the input data, a second optimized RPM when the ship moves from the first optimization point where the ship is currently located to the second optimization point.

To solve the technical problem, a device according to an embodiment of the present disclosure may include: a memory in which at least one program is stored; and a processor configured to execute the at least one program to perform an operation, wherein the processor may be further configured to receive input data including at least one of a route of the ship, sensor data of the ship, and weather data corresponding to a position where the ship is navigating on the route of the ship, divide the route into a plurality of optimization points including a departure point, at least one transit point, and an arrival point, calculate, based on the input data, a first optimized RPM when the ship moves from a first optimization point where the ship is currently located to a second optimization point where the ship is to move immediately after the first optimization point, and calculate, based on the first optimized RPM and the input data, a second optimized RPM when the ship moves from the first optimization point where the ship is currently located to the second optimization point.

An embodiment of the present disclosure may provide a computer-readable recording medium storing a program for performing the method.

### Advantageous Effects of Invention

According to the present disclosure, an optimized RPM at each point of a fixed route may be calculated, and thus, a ship may efficiently navigate the fixed route.

According to the present disclosure, in case that a ship receives information calculated on land (a route, an estimated time of arrival (ETA) range, a state of a ship, etc.), the ship may navigate at an optimized RPM while saving computing resources.

### Brief Description of Drawings

FIG. 1 is a conceptual diagram of a system for optimizing revolutions per minute (RPM) of a ship, according to an embodiment of the present disclosure.
FIG. 2 is a block diagram illustrating an example of an RPM optimization device described with reference to FIG. 1.
FIG. 3 is a diagram for conceptually describing a process processed by a processor of an RPM optimization device in the present disclosure.
FIG. 4 is a flowchart illustrating an example of processes performed by an RPM optimization device so as to implement a method according to the present disclosure.
FIG. 5 is a diagram for describing a process in which an RPM optimization device calculates an optimized RPM.
FIG. 6 is a diagram for describing another example of a process in which an RPM optimization device calculates an optimized RPM.
FIG. 7 is a diagram for describing an estimated time of arrival (ETA) boundary.
FIG. 8 is a diagram for describing a route to which an RPM optimization method according to the present disclosure is applied.
FIG. 9 is a flowchart illustrating another example of processes performed by an RPM optimization device so as to implement a method according to the present disclosure.
FIG. 10 is a diagram for describing a process in which an RPM optimization device calculates an optimized RPM according to a method described with reference to FIG. 9.
FIG. 11 is a diagram for describing another example of a process in which an RPM optimization device calculates a second optimized RPM.

### Best Mode for Carrying out the Invention

To solve the technical problems, a method according to an embodiment of the present disclosure includes: receiving input data including at least one of a route of the ship, sensor data of the ship, and weather data corresponding to a position where the ship is navigating on the route of the ship; dividing the route into a plurality of optimization points including a departure point, at least one transit point, and an arrival point; and calculating, based on the input data, an optimized revolutions per minute (RPM) when the ship moves from a first optimization point to a second optimization point where the ship is to move immediately after the first optimization point.

In the method, the calculating of the optimized RPM may include calculating an optimized RPM for the optimization point immediately after the arrived optimization point, based on the input data, whenever the ship arrives at one of the optimization points included in the route.

In the method, the calculating of the optimized RPM may include, before the ship departs from the departure point, repeatedly calculating the optimized RPM for all optimization points included in the route.

In the method, the optimized RPM may be an RPM selected in a preset range of RPM in accordance with a certain selection criterion.

In the method, in the calculating of the optimized RPM, there are at least two times capable of reaching the second optimization point, and the optimized RPM may be an RPM corresponding to a time selected from the at least two times.

In the method, a time capable of reaching the second optimization point may be divided into fixed time intervals.

In the method, a time capable of reaching the second optimization point may be divided into equal intervals.

In the method, the calculating of the optimized RPM may include selecting, as the optimized RPM, an RPM that minimizes an objective function value among a plurality of RPMs for the second optimization point.

In the method, estimated time of departure of the ship at the departure point of the route and requested time of arrival of the ship at the arrival point of the route may be preset.

In the method, the calculating of the optimized RPM may include calculating the optimized RPM by additionally using a correlation between a cumulative movement distance of the ship on the route and estimated time of arrival (ETA) of the ship.

In the method, the dividing into the plurality of optimization points may include dividing the optimization points of the route at certain intervals.

In the method, the dividing into the plurality of optimization points may include dividing the optimization points of the route at equal intervals.

The method may further include controlling the ship to navigate according to the calculated optimized RPM.

To solve the technical problems, a device according to another embodiment of the present disclosure may include: a memory in which at least one program is stored; and a processor configured to execute the at least one program to perform an operation, wherein the processor may be further configured to receive input data including at least one of a route of the ship, sensor data of the ship, and weather data corresponding to a position where the ship is navigating on the route of the ship, divide the route into a plurality of optimization points including a departure point, at least one transit point, and an arrival point, and repeatedly calculate, based on the input data, an optimized RPM when the ship moves from a first optimization point where the ship is currently located to a second optimization point where the ship is to move immediately after the first optimization point.

To solve the technical problem, a method according to another embodiment of the present disclosure may include: receiving input data including at least one of a route of the ship, sensor data of the ship, and weather data corresponding to a position where the ship is navigating on the route of the ship; dividing the route into a plurality of optimization points including a departure point, at least one transit point, and an arrival point; calculating, based on the input data, a first optimized RPM when the ship moves from a first optimization point where the ship is currently located to a second optimization point where the ship is to move immediately after the first optimization point; and calculating, based on the first optimized RPM and the input data, a second optimized RPM when the ship moves from the first optimization point where the ship is currently located to the second optimization point.

In the method, the calculating of the first optimized RPM may include calculating a first optimized RPM for the optimization point immediately after the arrived optimization point, based on the input data, whenever the ship arrives at one of the optimization points included in the route.

In the method, the calculating of the first optimized RPM may include, before the ship departs from the departure point, repeatedly calculating the first optimized RPM for all optimization points included in the route, and the calculating of the second optimized RPM may include, before the ship departs from the departure point, repeatedly calculating the second optimized RPM for all optimization points included in the route.

In the method, the first optimized RPM may be an RPM selected in a preset range of RPM in accordance a certain selection criterion, and the second optimized RPM may be an RPM selected in a range of RPM narrower than the preset range in accordance with a certain selection criterion.

In the method, in the calculating of the first optimized RPM, there are at least two times capable of reaching the second optimization point, and the first optimized RPM may be an RPM corresponding to a time selected from the at least two times.

In the method, a time capable of reaching the second optimization point may be divided into fixed time intervals.

In the method, a time capable of reaching the second optimization point may be divided into equal intervals.

In the method, the calculating of the first optimized RPM may include selecting, as the optimized RPM, an RPM that minimizes an objective function value among a plurality of RPMs for the second optimization point.

In the method, estimated time of departure (ETD) of the ship at the departure point of the route and requested time of arrival (RTA) at the ship for the arrival point of the route may be preset.

In the method, the calculating of the first optimized RPM may include calculating the first optimized RPM by additionally using a correlation between a cumulative movement distance of the ship on the route and estimated time of arrival (ETA) of the ship, and the calculating of the second optimized RPM may include calculating the second optimized RPM by additionally using a correlation between a cumulative movement distance of the ship on the route and ETA of the ship.

In the method, the dividing into the plurality of optimization points may include dividing the optimization points of the route at certain intervals.

In the method, the dividing into the plurality of optimization points may include dividing the optimization points of the route at equal intervals.

The method may further include controlling the ship to navigate according to the calculated second optimized RPM.

To solve the technical problem, a device according to an embodiment of the present disclosure may include: a memory in which at least one program is stored; and a processor configured to execute the at least one program to perform an operation, wherein the processor may be further configured to receive input data including at least one of a route of the ship, sensor data of the ship, and weather data corresponding to a position where the ship is navigating on the route of the ship, divide the route into a plurality of optimization points including a departure point, at least one transit point, and an arrival point, calculate, based on the input data, a first optimized RPM when the ship moves from a first optimization point where the ship is currently located to a second optimization point where the ship is to move immediately after the first optimization point, and calculate, based on the first optimized RPM and the input data, a second optimized RPM when the ship moves from the first optimization point where the ship is currently located to the second optimization point.

An embodiment of the present disclosure may provide a computer-readable recording medium storing a program for performing the method.

### Mode for the Invention

As the present description allows for various changes and numerous embodiments, certain embodiments will be illustrated in the drawings and described in detail in the written description. Effects and features of the present disclosure, and methods of achieving them will be clarified with reference to embodiments described below in detail with reference to the drawings. However, the present disclosure is not limited to the following disclosed embodiments and may be embodied in various forms.

Hereinafter, embodiments will be described in detail with reference to the accompanying drawings. When describing embodiments with reference to the accompanying drawings, the same or corresponding elements are denoted by the same reference numerals, and redundant descriptions thereof are omitted.

In the following embodiments, the terms "first," "second," etc. are not used in a restrictive sense and are used to distinguish one element from another.

The singular forms as used herein are intended to include the plural forms as well unless the context clearly indicates otherwise.

It will be understood that the terms "include" and/or "comprise" used herein specify the presence of stated features or elements, but do not preclude the presence or addition of one or more other features or elements.

When a certain embodiment is implemented differently, a specific process sequence may be performed differently from a sequence described herein. For example, two consecutively described processes may be performed substantially at the same time or performed in an order opposite to the stated order.

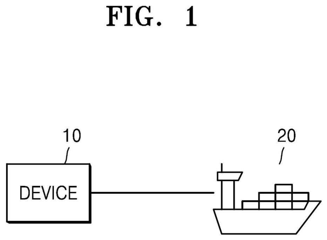

FIG. 1 is a conceptual diagram of a system for optimizing the revolutions per minute (RPM) of a ship, according to an embodiment of the present disclosure.

Referring to FIG. 1, a system for optimizing RPM of a ship 20, according to an embodiment, may include a device for optimizing the RPM of the ship 20 (hereinafter, an 'RPM optimization device 10') and the ship 20. In the present document, the ship 20 may refer to at least one of a plurality of devices (e.g., a communication unit, a sensor unit, a database, etc.) provided in the ship 20. In addition, in the present document, the expression that the RPM optimization device 10 performs a certain operation may mean that at least one processor provided in the RPM optimization device 10 performs the operation.

In an embodiment, the RPM optimization device 10 may receive input data including at least one of a route of the ship 20, sensor data of the ship 20, and weather data corresponding to a position where the ship is navigating on the route of the ship 20, may divide the route into a plurality of optimization points including a departure point, at least one transit point, and an arrival point, and may calculate, based on the input data, an optimized RPM when the ship 20 moves from a first optimization point where the ship 20 is currently located to a second optimization point where the ship 20 is to move immediately after the first optimization point.

In an embodiment, the RPM optimization device 10 may calculate an optimized RPM for the optimization point immediately after the arrived optimization point, based on the input data, whenever the ship 20 arrives at one of the optimization points included in the route.

In an embodiment, before the ship 20 departs from the departure point, the RPM optimization device 10 may repeatedly calculate the optimized RPM for all optimization points included in the route.

In an embodiment, the optimized RPM calculated by the RPM optimization device 10 may be an RPM selected in a preset range of RPM in accordance with a certain selection criterion.

In an embodiment, there are at least two times capable of reaching the second optimization point of the RPM optimization device 10, and the optimized RPM calculated by the RPM optimization device 10 may be an RPM corresponding to the time selected from the at least two times.

In an embodiment, the time capable of reaching the second optimization point of the RPM optimization device 10 may be divided into fixed time intervals.

In an embodiment, the time capable of reaching the second optimization point of the RPM optimization device 10 may be divided into random time intervals.

In an embodiment, the RPM optimization device 10 may select, as the optimized RPM, an RPM which minimizes an objective function value among a plurality of RPMs for the second optimization point.

In an embodiment, the RPM optimization device 10 may calculate the optimized RPM based on a preset estimated time of departure of the ship 20 at the departure point of the route and a preset requested time of arrival of the ship 20 for the arrival point of the route.

In an embodiment, the RPM optimization device 10 may calculate the optimized RPM by additionally using the correlation between a cumulative movement distance of the ship 20 on the route and an estimated time of arrival (ETA) of the ship 20.

In an embodiment, the RPM optimization device 10 may divide the optimization points of the route into certain intervals.

In an embodiment, the RPM optimization device 10 may divide the optimization points of the route into random intervals.

In an embodiment, the RPM optimization device 10 may control the ship 20 to navigate according to the calculated optimized RPM.

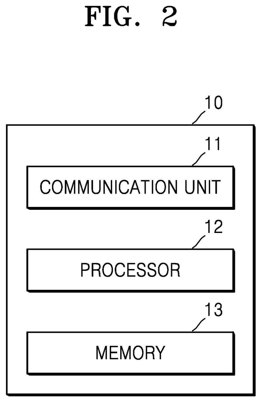

FIG. 2 is a block diagram illustrating an example of the RP optimization device described with reference to FIG. 1.

Hereinafter, a description is given with reference to FIG. 1.

Referring to FIG. 2, it may be seen that the RPM optimization device 10 includes a communication unit 11, a processor 12, and a memory 13.

The communication unit 11 may include one or more components which enable wired/wireless communication with an external device. For example, the communication unit 11 may include at least one piece of hardware necessary to implement short-range communication, such as Wireless Fidelity (WI-FI) or Bluetooth, in a network provided by a communication network, or to implement various communications, including the Internet, when a local area network (LAN) cable is connected. The communication unit 11 may include a module for performing very high frequency (VHF) communication with the ship 20.

The memory 13 is hardware which stores various data processed in the RPM optimization device 10 and may store a program for processing and control by the processor 12. The memory 13 may include random access memory (RAM), such as dynamic random access memory (DRAM) or static random access memory (SRAM), read-only memory (ROM), electrically erasable programmable read-only memory (EEPROM), compact-disc read-only memory (CD-ROM), Blu-ray or other optical disk storage, hard disk drive (HDD), solid state drive (SSD), or flash memory.

The processor 12 may control the overall operations of the RPM optimization device 10. For example, the processor 12 may execute programs stored in the memory 13 to perform overall control on an input unit (not shown), a display (not shown), the communication unit 11, the memory 13, and the like, which are included in the RPM optimization device 10.

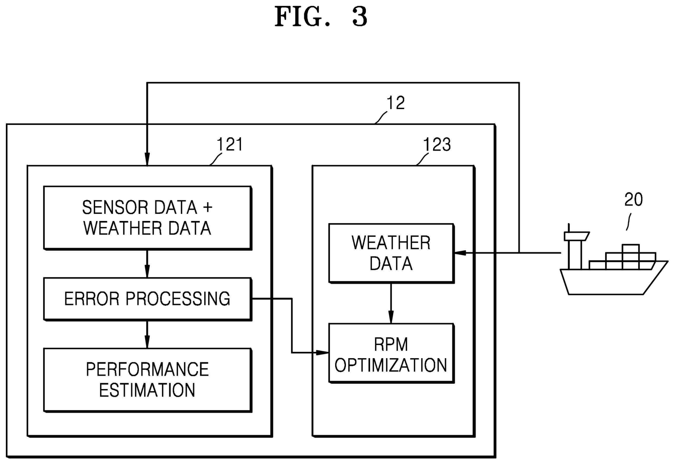

In an embodiment, the processor 12 may receive input data including at least one of a route of the ship 20, sensor data of the ship 20, and weather data corresponding to a position where the ship is navigating on the route of the ship 20, may divide the route into a plurality of optimization points including a departure point, at least one transit point, and an arrival point, and may calculate, based on the input data, an optimized RPM when the ship 20 moves from a first optimization point where the ship 20 is currently located to a second optimization point where the ship 20 is to move immediately after the first optimization point. A specific process of the processor 12 is described below with reference to FIGS. 3 to 10.

In case that the RPM optimization device 10 is implemented as a physical device, the processor 12 may be implemented by using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

In addition, in case that the RPM optimization device 10 of the present disclosure is implemented in the form of an application (program) which runs on an integrated data processing device such as a server, the processor 12 and the memory 13 included in the RPM optimization device 10 may be implemented in the form of a virtual machine which implements hardware, such as DSPs, microcontrollers, RAM, ROM, or HDD, as software (command script).

FIG. 3 is a diagram for conceptually describing the process processed by the processor of the RPM optimization device in the present disclosure.

Referring to FIG. 3, it may be seen that the processor 12 includes a performance estimation module 121 and an optimization module 123.

First, the performance estimation module 121 may receive sensor data and weather data from the ship 20. The sensor data is a general term for data in which sensing values collected from various sensors installed in the ship 20 are separately classified for each sensor, and may include position data, navigation data, engine and machine data, communication data, or the like of the ship 20. The weather data is data generated by sensors which selectively sense weather-related information among various sensors installed in the ship 20, and may include wind speed data, air pressure data, temperature data, humidity data, or the like.

After receiving the sensor data and the weather data and then processing errors of the received sensor data and weather data by using a filter, the performance estimation module 121 may estimate the performance of the RPM optimization device 10 by using machine learning.

The optimization module 123 may receive the error-filtered sensor data and weather data from the performance estimation module 121 and may calculate the optimized RPM of the ship 20, based on the received data. In the process of calculating the optimized RPM, the optimization module 123 may not only receive sensor data and weather data (first weather data) from the performance estimation module 121, but also receive new weather data (second weather data) from the ship 20. The first weather data may be data which may be obtained through a weather forecast before the ship 20 navigates, and the second weather data may be weather data which is actually measured while the ship 20 is actually navigating on the route. By calculating the optimized RPM and then transmitting the optimized RPM to the ship 20, the optimization module 123 may enable the ship 20 to navigate efficiently by using the optimized RPM.

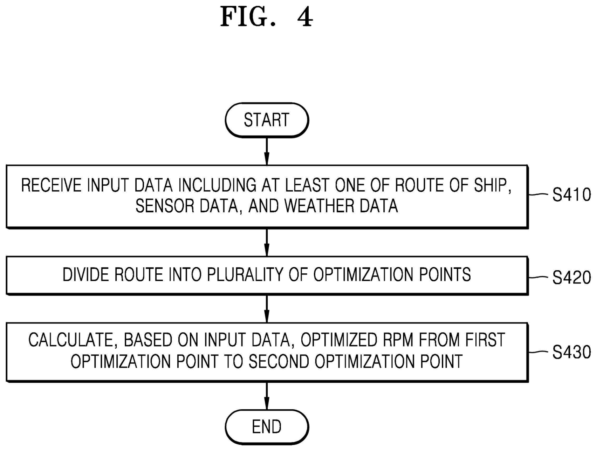

FIG. 4 is a flowchart illustrating an example of processes performed by the RPM optimization device so as to implement the method according to the present disclosure.

The method according to FIG. 4 may be implemented by the RPM optimization device 10 described with reference to FIGS. 2 and 3 and the processor 12 included in the RPM optimization device 10, and descriptions redundant with those provided above are omitted.

The RPM optimization device 10 may receive input data including at least one of the route of the ship 20, sensor data of the ship 20, and weather data corresponding to the position where the ship 20 is navigating on the route of the ship 20 (S410).

In the present disclosure, it is assumed that the route of the ship 20 is a fixed route from which the ship 20 is unable to arbitrarily deviate while continuing to navigate to an arrival point set on the route after departure. Because the present disclosure suggests a method of calculating an optimized RPM to be adopted between one point and another point constituting the route while the route is fixed, the route on which the ship 20 moves is determined in advance so as to minimize unnecessary parameters. The sensor data of the ship 20 and the weather data of the ship 20 have already been described with reference to FIG. 3.

The RPM optimization device 10 may divide the route into a plurality of optimization points including a departure point, at least one transit point, and an arrival point (S420). In operation S420, the optimization point refers to a point where the calculation of the optimized RPM is required. In case that the route of the ship 20 is divided into a plurality of optimization points including a departure point, at least one transit point, and an arrival point in operation S420, the route of the ship 20 may include as many optimization points as the number obtained by adding 2 to the number of transit points. For example, in case that there are n transit points, the route of the ship 20 may be divided into a total of (n+2) optimization points.

In an embodiment, the route may be divided into preset intervals. For example, the route may be divided into equal intervals. For example, the route may be divided into different intervals depending on a maritime area. The RPM optimization device 10 may calculate, based on the input data, the optimized RPM when the ship 20 moves from a first optimization point to a second optimization point where the ship 20 is to move immediately after the first optimization point (S430). In operation S430, the optimized RPM refers to an optimized RPM value calculated according to the present disclosure. In addition, the optimized RPM for the first optimization point and the second optimization point refers to the RPM of the ship 20 which is movable most efficiently in case that the ship 20 moves to the second optimization point in a current state where the ship 20 is located at the first optimization point.

In an embodiment, the RPM optimization device 10 may calculate the optimized RPM, based on the input data, whenever the weather data included in the input data is updated. The weather data may be updated automatically at preset time intervals or in response to a user request. The present embodiment takes into account the feature in which the weather data included in the input data is updated while the ship 20 continues to navigate. Accordingly, the present embodiment is efficient in that the optimized RPM is calculated for the optimization point to be reached in the future based on the current position of the ship and the ship 20 is able to navigate based on the calculated optimized RPM.

In an embodiment, the RPM optimization device 10 may calculate the optimized RPM based on the input data in response to an RPM optimization request from a user.

In an embodiment, the RPM optimization device 10 may update the optimized RPM in case that it is determined that the expected optimization point and the current position of the ship 20 are far away from each other by a preset distance or more. The RPM optimization device 10 may automatically determine whether the distance between the expected optimization point and the current position of the ship 20 is greater than or equal to a preset distance. The present embodiment takes into account the feature in which the weather data included in the input data is different from the weather conditions actually experienced by the ship 20 while continuing to navigate. Accordingly, the present embodiment is efficient in that the optimized RPM is calculated by preferentially using new weather data (second weather data) from the ship 20 and the ship 20 is able to navigate based on the optimized RPM reflecting the actual weather conditions.

In another embodiment, before the ship 20 departs from the departure point, the RPM optimization device 10 may repeatedly calculate the optimized RPM for all optimization points included in the route. According to the present embodiment, before the ship 20 departs, the optimized RPM may be calculated in advance for all optimization points included in the route. Accordingly, even in case that the ship 20 is unable to communicate with the outside, the ship 20 may navigate based on the optimized RPM in all sections of the route.

In the present disclosure, the optimized RPM may be an RPM selected in a preset range of RPM in accordance with a certain selection criterion. As an example, the RPM optimization device 10 may calculate the optimized RPM by additionally using, in addition to the input data described above, the correlation between the cumulative movement distance (or position) of the ship 20 on the route and the ETA of the ship 20.

In case that the ship 20 is at the first optimization point and at least two ETAs at which the ship is able to reach the second optimization point are calculated, the RPM optimization device 10 may determine, as the optimized RPM, the RPM corresponding to the time selected from the at least two ETAs.

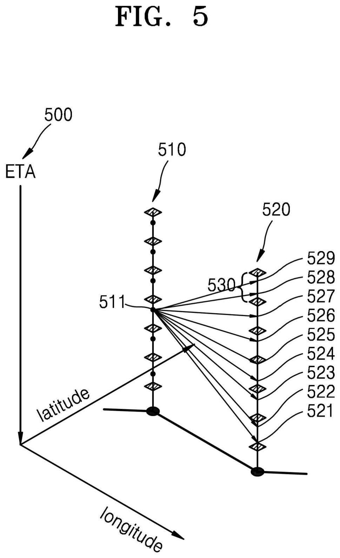

FIG. 5 is a diagram for describing the process in which the RPM optimization device calculates the optimized RPM.

FIG. 5 is a diagram for describing the process in which the RPM optimization device 10 calculates the optimized RPM by using the correlation between the position of the ship 20 and the ETA of the ship 20. FIG. 5 illustrates a three-dimensional graph in which an x-axis, a y-axis, and a z-axis respectively represent longitude, latitude, and ETA.

In FIG. 5, an ETA axis 500 symbolically represents that the RPM optimization device 10 is able to calculate the optimized RPM by using the ETA of the ship 20. In FIG. 5, a first optimization point 510 and a second optimization point 520 are located at positions corresponding to the latitude and the longitude thereof. Because the first optimization point 510 refers to a point where the ship 20 is currently located on a fixed route, the ETA value of the first optimization point 510 is fixed to one, as illustrated in FIG. 5. That is, the ETA value of the first optimization point 510 is a time value required for the ship 20 to move from a point before reaching the first optimization point 510 to the first optimization point 510, and thus, the ETA value of the first optimization point 510 is a predetermined constant. The RPM optimization device 10 may primarily calculate the ETA range for moving the ship 20 from the first optimization point 510 to the second optimization point 520. In FIG. 5, the ETA range from the first optimization point 510 to the second optimization point 520, which is calculated by the RPM optimization device 10, may be ETAₘᵢₙ to ETAₘₐₓ. The ETA range to the optimization point may increase as the distance from the starting point increases. The RPM optimization device 10 may divide the ETA range at the calculated second optimization point 520 into preset time intervals Δt₁ 530. Unlike as illustrated in FIG. 5, the preset time interval Δt₁ 530 may vary depending on the embodiment.

Next, the RPM optimization device 10 may calculate an "ETA value group" which is actually possible when navigating from the first optimization point 510 to the second optimization point 520. For example, in FIG. 5, the "ETA value group" calculated by the RPM optimization device 10 includes first to ninth ETAs 521 to 529. The types of ETA values included in the "ETA value group" vary depending on the magnitude of k, which is the number of combinations of RPMs adoptable in the process in which the ship 20 moves from the first optimization point 510 to the second optimization point 520. As k increases, the amount of computation of the RPM optimization device 10 increases exponentially, but the possibility of detecting a better ETA value (and a combination of RPMs corresponding to the ETA value) also increases.

In FIG. 5, in case that the ship 20 moves from the first optimization point 510 to the second optimization point 520, when the ship 20 moves to reach the second optimization point 520 until the first ETA 521, this means moving for the shortest time. Accordingly, the highest RPM may be determined as the optimized RPM, but other metrics which the ship 20 has to comply with may be deteriorated. On the other hand, in case that the ship 20 moves from the first optimization point 510 to the second optimization point 520, when the ship 20 moves to reach the second optimization point 520 until the ninth ETA 529, this means moving for the longest time. Accordingly, the lowest RPM may be determined as the optimized RPM, but other metrics which the ship 20 has to comply with may be improved. Here, other metrics which the ship 20 has to comply with are a concept including fuel oil consumption (FOC), carbon intensity index (CII), and total shipping cost including navigation delay penalty, and may be basic metrics for implementing an objective function described below.

Consequently, the RPM optimization device 10 may determine at least one of the first to ninth ETAs 521 to 529, which are the time required to move from the first optimization point 510 to the second optimization point 520 in FIG. 5, as the optimized ETA of the second optimization point 520. In case that at least one of the first to ninth ETAs 521 to 529 is determined, the RPM optimization device 10 may calculate the RPM or combinations of RPMs corresponding to the determined ETA.

In an embodiment, the RPM optimization device 10 may determine the optimized ETA for each Δt₁ 530 of the second optimization point 520, which is the time required to move from the first optimization point 510 to the second optimization point 520 in FIG. 5. For example, because the ETA range at the second optimization point 520 is divided into six Δt₁ 530 in FIG. 5, six optimized ETAs at the second optimization point 520 may be determined. Because the first ETA 521 and the second ETA 522 are included in the same Δt₁ 530, only one ETA among the first ETA 521 and the second ETA 522 may be determined as the optimized ETA.

The RPM optimization device 10 may determine at least one of the first to ninth ETAs 521 to 529, which are the time required to move from the first optimization point 510 to the second optimization point 520, as the optimized ETA of the second optimization point 520, and may calculate the optimized ETA for the optimization point to be reached after the second optimization point 520, based on the determined optimized ETA of the second optimization point 520. In case that the ETA range increases as the optimization point is farther away from the departure point, the time interval in which the ETA range is divided by Δt1 530 also increases. Accordingly, as the optimization point is farther away from the departure point, the number of Δt1 530 divided areas at the optimization point and optimized ETAs may also increase.

For example, in FIG. 5, the number of Δt1 530 divided areas and optimized ETAs of the first optimization point 510 is six, but only one optimized ETA 511 may be illustrated for convenience of explanation. Because the six optimized ETAs 511 of the first optimization point 510 calculate the optimized ETAs for the second optimization point 520, respectively, a total of 36 optimized ETAs for the second optimization point 520 may be determined. In case the ETA range increases as the optimization point is farther away from the departure point, the number of optimized ETAs of the arrival point may be larger than the number of optimized ETAs of the second optimization point 520.

In an embodiment, the RPM optimization device 10 may use an objective function to determine at least one of the first to ninth ETAs 521 to 529 of the second optimization point 520 in FIG. 5. More specifically, the objective function refers to input data input to a model which performs repetitive operations inside the RPM optimization device 10, and may be in the form of an n^{th}-order function (where n is a natural number) which reflects characteristics of data desired by the user. For example, the objective function may be a function for one of FOC, CII, and total shipping cost including navigation delay penalty, and may be a function which reflects at least two of the three characteristics described above, depending on the embodiment. The RPM optimization device 10 may select, as an optimizing solution, the ETA with the lowest objective function value among the first to ninth ETAs 521 to 529 primarily determined in FIG. 5.

The RPM optimization device 10 may calculate the optimized RPM based on the ETA selected as the optimizing solution.

In an embodiment, the RPM optimization device 10 may perform an operation of determining an optimized ETA for each point from the starting point or the optimization point closest to the current position of the ship 20 to the departure point. The RPM optimization device 10 may select, as the optimizing solution, the ETA with the lowest objective function value among the optimized ETAs of the arrival point, and may calculate the optimized RPM based on the ETA selected as the optimizing solution.

In an embodiment, the RPM optimization device 10 may filter the optimized ETA which is earlier than the requested time of arrival (RTA) of the ship 20 among the optimized ETAs of the arrival point, may select, as the optimizing solution, the ETA with the lowest objective function value among the filtered optimized ETAs of the arrival point, and may calculate the optimized RPM based on the ETA selected as the optimizing solution.

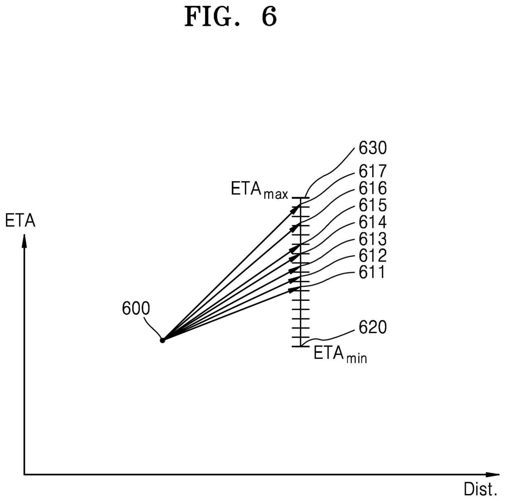

FIG. 6 is a diagram for describing another example of the process in which the RPM optimization device calculates the optimized RPM.

More specifically, FIG. 5 is a diagram for describing the process in which the RPM optimization device 10 calculates the optimized RPM by using the correlation between the position of the ship 20 and the ETA of the ship 20, and a three-dimensional graph in which the x-axis, the y-axis, and the z-axis respectively represent longitude, latitude, and ETA, is illustrated. Compared to FIG. 5, FIG. 6 is a diagram for describing the process in which the RPM optimization device 10 calculates the optimized RPM by using the correlation between the cumulative distance of the ship 20 and the ETA of the ship 20, and a two-dimensional graph in which the x-axis and the y-axis respectively represent a cumulative movement distance and ETA is illustrated.

In FIG. 6, the ship 20 moves from the first optimization point 600 to the second optimization point, and the RPM optimization device 10 may primarily determine the ETA range (ETAₘᵢₙ 620 to ETAₘₐₓ 630) based on input data for the ship 20, may equally divide the determined ETA range into a certain time interval Δt₁, and then, may calculate tenth to sixteenth ETAs 611 to 617 included in the "ETA value group." The RPM optimization device 10 may determine at least some of the tenth to sixteenth ETAs 611 to 617 included in the "ETA value group" as the optimized ETA of the second optimization point. For example, the ETA range determined in FIG. 6 is formed by summing 16 Δt₁(s) defined at certain time intervals.

In an embodiment, the ETA range may increase as the optimization point is farther away from the starting point on a set route. For example, the ETA range at the optimization point close to the arrival point may be greater than the ETA range at the optimization point close to the starting point.

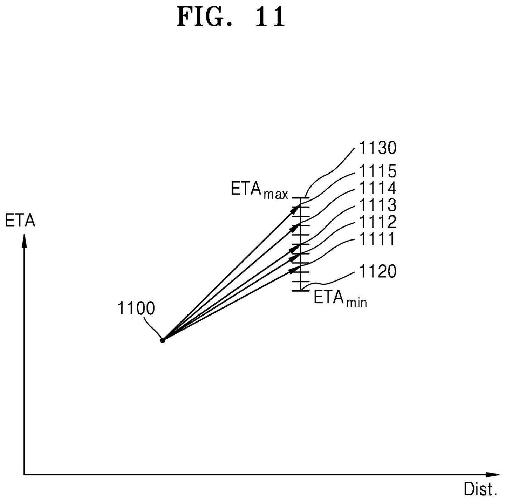

In an embodiment, in case that the RPM optimization device 10 repeatedly performs the optimized RPM calculation process (S410 to S430) for a set route, the ETA range for the same optimization point may gradually decrease as the process is repeated. In case that the RPM optimization device 10 repeats the process of deriving the optimizing solution of the ETA for the second optimization point of the ship 20, ETAₘᵢₙ 620 and ETAₘₐₓ 630 change, and the ETA range of the second optimization point decreases. This is described below with reference to FIG. 11.

As described with reference to FIG. 5, depending on the combination of RPMs set in the RPM optimization device 10 in FIG. 6, the number of ETAs included in the "ETA value group" may increase by more than 7, and accordingly, the RPM optimization device 10 may calculate a more precisely optimized RPM.

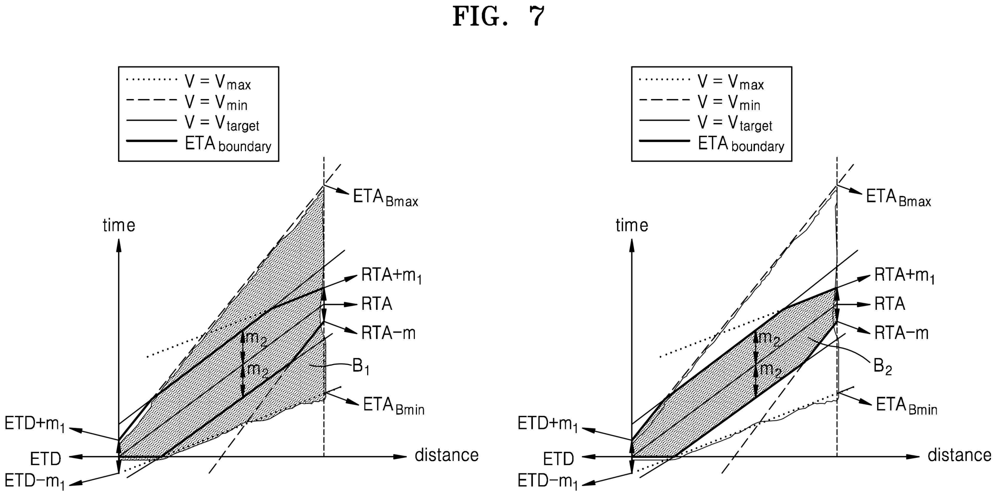

FIG. 7 is a diagram for describing an ETA boundary.

In the present disclosure, the estimated time of departure (ETD) of the ship 20 at the departure point of the route and the RTA of the ship 20 at the arrival point of the route are preset. However, because the RTAs for the remaining optimization points (transit points) excluding the departure point and the arrival point of the route are not fixed, the RPM optimization device 10 according to the present disclosure controls the ship 20 to use data collectable at that time (sensor data, weather data, and other data of the ship 20) to achieve the lowest ETA for the objective function whenever the ship 20 arrives at the remaining optimization points (transit points) excluding the departure point and the arrival point, thereby enabling the control to comprehensively comply with the metrics of interest (FOC, CII, and navigation delay penalty delay, etc.) that the user wants to intensively monitor.

In an embodiment, a first ETA boundary B1 may be calculated based on information obtained by adding or subtracting a first margin value m₁ with respect to the ETD of the ship 20. The RPM optimization device 10 may determine the first ETA boundary B1 by adding or subtracting the first margin value m₁ with respect to the ETD of the ship 20 and then reflecting a maximum RPM and a minimum RPM of the ship 20. The RPM optimization device 10 may determine the ETA range by referring to the first ETA boundary B1 according to the position of the ship 20. In case that the ETA range is determined by referring to the first ETA boundary B1, the ETA range may increase as the optimization point is farther away from the departure point.

In an embodiment, a second ETA boundary B2 may be calculated based on information obtained by adding or subtracting the first margin value m₁ with respect to the ETD and the RTA of the ship 20 and information obtained by adding or subtracting a second margin value m₂ with respect to the speed at which the ship 20 departs at the ETA and navigates at a constant speed so as to arrive at the RTA. First, in case that the ETD and the RTA of the ship 20 are determined, the RPM optimization device 10 may primarily determine the ETA range based on the addition or subtraction of the first margin value m₁ with respect to the ETD and the RTA. For example, the RPM optimization device 10 may determine the primary ETA range by adding or subtracting the first margin value m₁ with respect to the ETD and the RTA and then reflecting a maximum RPM and a minimum RPM of the ship 20. Next, in case that the ship 20 departs at the ETA and navigates at a constant speed so as to arrive at the RTA, the RPM optimization device 10 may determine a secondary ETA range based on information obtained by adding or subtracting the second margin value m₂ with respect to the corresponding speed. The RPM optimization device 10 may define the overlapped area of the primary ETA range and the secondary ETA range as the second ETA boundary B2. The RPM optimization device 10 may determine the ETA range by referring to the second ETA boundary B2 according to the position of the ship 20. In case that the ETA range is determined by referring to the second ETA boundary B2, the ETA range may increase as the optimization point is farther away from the departure point and may decrease again as the optimization point is closer to the arrival point.

In case that the ETA range is determined by the first ETA boundary B1 or the second ETA boundary B2, the RPM optimization device 10 may calculate an "ETA value group" including a plurality of ETA values within the determined ETA range by comprehensively taking into account the distance between the first optimization point of the ship 20 and the second optimization point to which the ship 20 has to move after the first optimization point, the sensor data of the ship 20, and the weather data of the ship 20.

The RPM optimization device 10 may identify an objective function defined internally in the RPM optimization device 10, may select an ETA (hereinafter, "target ETA") corresponding to a point where the objective function value is minimized among a plurality of ETA values included in the "ETA value group," and may calculate an RPM (or a combination of RPMs) corresponding to the corresponding ETA as an optimized RPM.

In FIG. 7, the first ETA boundary B1 or the second ETA boundary B2 is a parameter defined in the process in which the RPM optimization device 10 selects the target ETA and moves the ship 20 to the second optimization point at the corresponding optimized RPM. In case that the ship 20 navigates within the ETA boundary provided by the RPM optimization device 10, the ship 20 may achieve the RTA calculated in advance.

Referring to FIG. 7, in case that the ship 20 navigates while controlling the RPM within the second ETA boundary B2 provided by the RPM optimization device 10, the ship 20 may reach the arrival point within a time zone in which the first margin value m₁ is added to or subtracted from the RTA. However, in other cases, the ship 20 may not reach the arrival point within the time zone in which the first margin value m₁ is added to or subtracted from the RTA. In FIG. 7, the second margin value m₂ refers to a travel time margin for the ship 20 to reach the arrival point within a set time, and in case that the ship 20 records a time zone exceeding the second margin value m₂ at a specific point while moving to the arrival point, the ship 20 may eventually not be able to reach the second optimization point within the set time.

In case that the ship 20 navigates while controlling the RPM within the first ETA boundary B1 provided by the RPM optimization device 10, there may be cases where the ship 20 is unable to reach the arrival point within the time zone in which the first margin value m₁ is added to or subtracted from the RTA. In this case, the RPM optimization device 10 may filter the optimized ETAs of the arrival point that are earlier than the RTA and calculate the optimized RPM based on the ETA with the lowest objective function value among the filtered optimized ETAs of the arrival point.

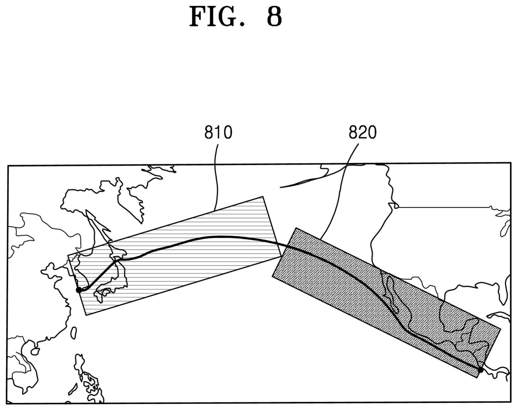

FIG. 8 is a diagram for describing a route to which an RPM optimization method according to the present disclosure is applied.

The RPM optimization device 10 according to the present disclosure may be installed in a cloud center or a land control center located inland and may operate to perform the function of calculating the optimized RPM of the ship 20 navigating on the route and transmitting the optimized RPM to the ship 20. According to an embodiment, the RPM optimization device 10 may calculate and provide an optimized RPM for only a portion of the route, not the entire route on which the ship 20 navigates.

Referring to FIG. 8, the route on which the ship 20 navigates may include a first route 810 and a second route 820. The RPM optimization device 10 may calculate and provide the optimized RPM in case that the ship 20 is navigating on the first route 810. The RPM optimization device 10 may not provide the optimized RPM in case that the ship 20 is navigating on the second route 820, and may provide a preset RPM. In this case, the ship 20 may navigate at the preset RPM on the second route 820.

For example, in FIG. 8, the first route 810 may be a route on which RPM optimization is performed because weather data for the ship 20 is secured, and the second route 820 may be a route on which RPM optimization process is not performed because weather data for the ship 20 is not secured.

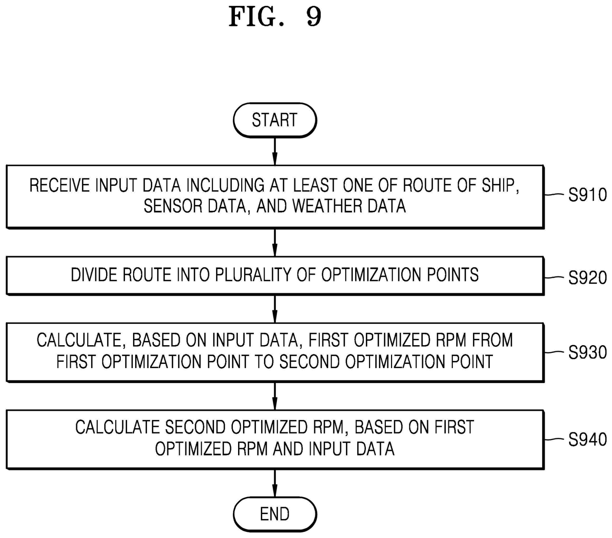

In an embodiment, the first route 810 may be a route on which weather data for the ship 20 is secured, and the second route 820 may be a route on which weather data for the ship 20 is not secured. The RPM optimization device 10 may calculate and provide the optimized RPM in case that the ship 20 is navigating on the first route 810. The RPM optimization device 10 may calculate and provide the optimized RPM based on the last updated weather data in case that the ship 20 is navigating on the second route 820. FIG. 9 is a flowchart illustrating another example of processes performed by the RPM optimization device so as to implement the method according to the present disclosure.

The method according to FIG. 9 may be implemented by the RPM optimization device 10 described with reference to FIGS. 2 and 3 and the processor 12 included in the RPM optimization device 10, and descriptions redundant with those provided above are omitted.

The RPM optimization device 10 may receive input data including at least one of the route of the ship 20, sensor data of the ship 20, and weather data corresponding to the position where the ship 20 is navigating on the route of the ship 20 (S910). Operation S910 may be processed in the same manner as operation S410 described above.

The RPM optimization device 10 may divide the route into a plurality of optimization points including a departure point, at least one transit point, and an arrival point (S920). Operation S920 may be processed in the same manner as operation S420 described above.

The RPM optimization device 10 may calculate, based on input data, the optimized ETA when the ship 20 moves from the first optimization point to the second optimization point where the ship 20 is to move immediately after the first optimization point, and may calculate a first optimized RPM based on the calculated optimized ETA (S930). Operation S930 may be processed in the same manner as operation S430 described above.

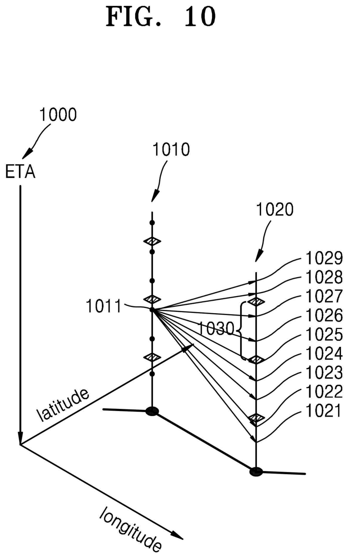

The RPM optimization device 10 may calculate, based on the first optimized RPM and the input data, a second optimized RPM when the ship 20 moves from the first optimization point to the second optimization point (S940). Operation S940 is described below with reference to FIGS. 10 and 11.

Hereinafter, alternative embodiments of the RPM optimization device 10 described with reference to FIG. 9 are described. The method according to FIG. 9 is similar to the RPM optimization method described with reference to FIG. 4, but differs from the RPM optimization method described with reference to FIG. 4 in that a primarily obtained optimized RPM is defined as a first optimized RPM, the process described with reference to FIGS. 5 to 7 is repeatedly performed based on the first optimized RPM and input data, the ETA range at a second optimization point is continuously narrowed, a target ETA is selected in the narrowed ETA range, and then, the corresponding RPM (or a combination of RPMs) is calculated, thereby obtaining a second optimized RPM which is calculated more precisely.

In an embodiment, the RPM optimization device 10 may calculate the first optimized RPM for the input route, based on the input data.

In an embodiment, before the ship 20 departs from the departure point, the RPM optimization device 10 may repeatedly calculate first optimized RPMs for all optimization points included in the route, and before the ship 20 departs from the departure point, the RPM optimization device 10 may repeatedly calculate second optimized RPMs for all optimization points included in the route.

In an embodiment, the first optimized RPM may be an RPM selected in a preset range of RPM in accordance a certain selection criterion, and the second optimized RPM may be an RPM selected in a range narrower than the preset range of RPM in accordance with a certain selection criterion.

In an embodiment, there are at least two times capable of reaching the second optimization point of the RPM optimization device 10, and the first optimized RPM may be an RPM corresponding to the time selected from the at least two times.

In an embodiment, the time capable of reaching the second optimization point of the RPM optimization device 10 may be divided into fixed time intervals.

In an embodiment, the time capable of reaching the second optimization point of the RPM optimization device 10 may be divided into random time intervals.

In an embodiment, the RPM optimization device 10 may select, as the second optimized RPM, an RPM that minimizes an objective function value among a plurality of RPMs for the second optimization point.

In an embodiment, in the RPM optimization device 10, the ETD of the ship at the departure point of the route and the RTA of the ship at the arrival point of the route may be preset values.

In an embodiment, the RPM optimization device 10 may calculate the first optimized RPM by additionally using the correlation between the cumulative movement distance of the ship 20 on the route and the ETA of the ship 20, and may calculate the second optimized RPM by additionally using the correlation between the cumulative movement distance of the ship 20 on the route and the ETA of the ship 20.

In an embodiment, the RPM optimization device 10 may divide the optimization points of the route into certain intervals.

In an embodiment, the RPM optimization device 10 may divide the optimization points of the route into random intervals.

In an embodiment, the RPM optimization device 10 may control the ship 20 to navigate according to the calculated optimized RPM.

FIG. 10 is a diagram for describing the process in which the RPM optimization device calculates the optimized RPM according to the method described with reference to FIG. 9.

FIG. 10 is a diagram for describing the process in which the RPM optimization device 10 calculates the second optimized RPM by using the correlation between the position of the ship 20 and the ETA of the ship 20. FIG. 10 illustrates a three-dimensional graph in which an x-axis, a y-axis, and a z-axis respectively represent longitude, latitude, and ETA. Because FIG. 10 is a diagram for describing the process after the RPM optimization device 10 has primarily calculated the first optimized RPM, the process described above with reference to FIG. 5 may be applied to the previous process for calculating the first optimized RPM.

In FIG. 10, an ETA axis 1000 symbolically represents that the RPM optimization device 10 is able to calculate the second optimized RPM by using the ETA of the ship 20. In FIG. 10, a first optimization point 1010 and a second optimization point 1020 are located at positions corresponding to the latitude and the longitude thereof. Because the first optimization point 1010 refers to a point where the ship 20 is currently located on a fixed route, the ETA value of the first optimization point 1010 is fixed to one, as illustrated in FIG. 10. That is, because the ETA value of the first optimization point 1010 is a time value required for the ship 20 to move from the point before reaching the first optimization point 1010 to the first optimization point 1010, the ETA value of the first optimization point 1010 is a predetermined constant.

The RPM optimization device 10 may secondarily calculate the ETA range for moving the ship 20 from the first optimization point 1010 to the second optimization point 1020. In FIG. 10, the ETA range from the first optimization point 1010 to the second optimization point 1020, which is calculated by the RPM optimization device 10, may be a narrower range than ETAₘᵢₙ to ETAₘₐₓ, which have been described with reference to FIG. 5. As described above, as the RPM optimization device 10 repeats the process of calculating the optimized RPM at the same first optimization point and second optimization point, the ETA range may be continuously reduced. The RPM optimization device 10 may divide the ETA range at the calculated second optimization point 1020 into preset time intervals Δt₂ 1030. Here, the preset time intervals Δt₂ 1030 may be identical to or different from the preset time intervals Δt₁ 530 described above with reference to FIG. 5. The RPM optimization device 10 may change the preset time intervals for dividing the ETA range in accordance with a certain rule whenever the optimized RPM process is repeatedly performed.

Next, the RPM optimization device 10 may calculate an "ETA value group" which is actually possible when navigating from the first optimization point 1010 to the second optimization point 1020. For example, in FIG. 10, the "ETA value group" calculated by the RPM optimization device 10 includes seventeenth to twenty-fifth ETAs 1021 to 1029. The types of ETA values included in the "ETA value group" vary depending on the magnitude of k, which is the number of combinations of RPMs adoptable in the process in which the ship 20 moves from the first optimization point 1010 to the second optimization point 1020. As k increases, the amount of computation of the RPM optimization device 10 increases exponentially, but the possibility of calculating a better ETA value (and a combination of RPMs corresponding to the ETA value) also increases.

In FIG. 10, in case that the ship 20 moves from the first optimization point 1010 to the second optimization point 1020, when the ship 20 moves to reach the second optimization point 1020 until the seventeenth ETA 1021, this means moving for the shortest time. Accordingly, the highest RPM (or a combination of relatively high RPMs) may be determined as the second optimized RPM (or RPM group), but other metrics which the ship 20 has to comply with may be deteriorated. On the other hand, in case that the ship 20 moves from the first optimization point 1010 to the second optimization point 1020, when the ship 20 moves to reach the second optimization point 1020 until the twenty-fifth ETA 1029, this means moving for the longest time. Accordingly, the lowest RPM (or a combination of relatively low RPMs) may be determined as the second optimized RPM, but other metrics which the ship 20 has to comply with may be improved. Here, other metrics which the ship 20 has to comply with are a concept including FOC, CII, and total shipping cost including navigation delay penalty, and may be basic metrics for implementing an objective function.

Consequently, the RPM optimization device 10 may determine at least one of the seventeenth to twenty-fifth ETAs 1021 to 1029, which are the time required to move from the first optimization point 1010 to the second optimization point 1020 in FIG. 10, as the optimized ETA of the second optimization point 1020. In case that at least one of the seventeenth to twenty-fifth ETAs 1021 to 1029 is determined, the RPM optimization device 10 may calculate the RPM or combinations of RPMs corresponding to the determined ETA as the second optimized RPM.

In an embodiment, Δt may be determined to be smaller as the optimized RPM calculation operation is repeated. For example, the RPM optimization device 10 may determine Δt₂ 1030 used in the second optimized RPM calculation operation to be a smaller value than Δt₁ 530 used in the first optimized RPM calculation operation. As the divided area of Δt decreases, the range in which the optimized ETA is determined at the corresponding optimization point decreases, and a more precise optimizing solution may be calculated. That is, the RPM optimization device 10 may obtain a more precisely calculated optimized RPM by repeating the optimized RPM calculation operation.

In an embodiment, the RPM optimization device 10 may determine the ETA range for the second optimization point 1020 in the second optimized RPM calculation operation to be narrower than the ETA range for the second optimization point 1020 in the first optimized RPM calculation operation. When Δt₁ 530 and Δt₂ 1030 are equal to each other, the number of Δt₂ 1030 divided areas for the second optimization point 1020 in the second optimized RPM calculation operation may be reduced. For example, in the first optimized RPM calculation operation, the Δt₁ 530 divided areas for the second optimization point 520 may include six divided areas, but in the second optimized RPM calculation operation, the Δt₂ 1030 divided areas for the second optimization point 1020 may include three divided areas. As described with reference to FIG. 5, the RPM optimization device 10 may use the objective function so as to determine at least one of the seventeenth to twenty-fifth ETAs 1021 to 1029 of the second optimization point 1020 in FIG. 10. More specifically, the objective function refers to input data input to a model which performs repetitive operations inside the RPM optimization device 10, and may be in the form of an n^{th}-order function (where n is a natural number) which reflects characteristics of data desired by the user. For example, the objective function may be a function for one of FOC, CII, and total shipping cost including navigation delay penalty, and may be a function which reflects at least two of the three characteristics described above, depending on the embodiment. The RPM optimization device 10 may select, as an optimizing solution, the ETA with the lowest objective function value among the seventeenth to twenty-fifth ETAs 1021 to 1029 primarily determined in FIG. 10.

The RPM optimization device 10 may calculate the second optimized RPM based on the ETA selected as the optimizing solution.

In an embodiment, the RPM optimization device 10 may perform an operation of determining an optimized ETA for each point from the starting point or the optimization point closest to the current position of the ship 20 to the departure point. The RPM optimization device 10 may select, as the optimizing solution, the ETA with the lowest objective function value among the optimized ETAs of the arrival point, and may calculate the second optimized RPM based on the ETA selected as the optimizing solution. In an embodiment, the RPM optimization device 10 may filter the optimized ETA which is earlier than the RTA of the ship 20 among the optimized ETAs of the arrival point and then calculate the optimized RPM.

The embodiment described with reference to FIG. 10 may be further expanded. The RPM optimization device 10 may continuously calculate a third optimized RPM, a fourth optimized RPM, and the like for the same first optimization point and second optimization point by repeating the process described with reference to FIG. 10. In this case, the ETA range for the second optimization point 1020 may be continuously reduced, and in case that the objective function change amount is lower than a preset threshold value, the RPM optimization device 10 may determine that the iterative operation is meaningless and may terminate the optimization process.

FIG. 11 is a diagram for describing another example of the process in which the RPM optimization device calculates the second optimized RPM.

FIG. 10 is a diagram for describing the process in which the RPM optimization device 10 calculates the second optimized RPM by using the correlation between the position of the ship 20 and the ETA of the ship 20. FIG. 10 illustrates a three-dimensional graph in which an x-axis, a y-axis, and a z-axis respectively represent longitude, latitude, and ETA. On the other hand, FIG. 11 is a diagram for describing the process in which the RPM optimization device 10 calculates the second optimized RPM by using the correlation between the cumulative movement distance Dist. of the ship 20 and the ETA of the ship 20, and a two-dimensional graph in which an x-axis and a y-axis represent the cumulative movement distance and the ETA, respectively.

In FIG. 11, the ship 20 moves from a first optimization point 1100 to a second optimization point. To primarily determine the ETA range, the RPM optimization device 10 may determine ETAₘᵢₙ 1120 and ETAₘₐₓ 1130 based on input data for the ship 20, may equally divide the determined ETA range into certain time interval Δt₂ 1030, and then, may calculate twenty-sixth to thirtieth ETAs 1111 to 1115 included in an "ETA value group." The ETA range determined in FIG. 11 is formed by summing 10 Δt₂(s) 1030 defined at certain time intervals.

ETAₘᵢₙ 1120 and ETAₘₐₓ 1130 change while the RPM optimization device 10 repeats the process of deriving the optimizing solution of the ETA for the second optimization point of the ship 20, and the ETA range of the second optimization point is slightly reduced, compared to the ETA range of FIG. 6. As described with reference to FIG. 10, depending on the combination of RPMs set in the RPM optimization device 10 in FIG. 11, the number of ETAs included in the "ETA value group" may increase by more than 5, or may decrease by more than 5.

According to the present disclosure, the optimized RPM at each point of the fixed route may be calculated, and thus, the ship may efficiently navigate the fixed route.

According to the present disclosure, in case that the ship receives information calculated on land (the route, the ETA range, the state of the ship, etc.), the ship may navigate at the optimized RPM while saving computing resources.

The embodiments described above may be implemented in the form of a computer program which may be executed through various elements on a computer, and such a computer program may be recorded on a computer-readable medium. At this time, the medium may include a magnetic medium such as hard disk, floppy disk, and magnetic tape, an optical recording medium such as CD-ROM and DVD, a magneto-optical medium such as floptical disks, and hardware devices specially configured to store and execute program instructions, such as ROM, RAM, or flash memory.

The computer program may be specially designed and configured for the present disclosure or may be known and available to those of ordinary skill in the art of computer software. Examples of the computer program may include not only machine language code generated by a compiler but also high-level language code that is executable using an interpreter or the like by a computer.

The specific implementations described in the present disclosure are only embodiments and do not limit the scope of the present disclosure in any way. For the sake of conciseness of the specification, descriptions of conventional electronic components, control systems, software, and other functional aspects of the systems may be omitted. In addition, connecting lines or connecting members illustrated in the drawings are intended to represent example functional connections and/or physical or circuit connections. In an actual device, it may appear as a variety of alternative or additional functional, physical, or circuit connections. Furthermore, when there is no specific mention such as "essential," "important," etc., it may not be a necessary component for the application of the present disclosure.

The use of the term "the" and similar demonstratives in the context of describing the present specification (especially in the context of the claims) is to be construed to cover both the singular and the plural. In addition, when a range is described in the present disclosure, it includes the disclosure to which individual values within the range are applied (unless otherwise indicated herein). This is the same as stating each individual value constituting the above range in the detailed description of the present disclosure. Finally, operations constituting methods according to the present disclosure may be performed in any suitable order unless otherwise indicated herein or otherwise clearly contradicted by context. The present disclosure is not necessarily limited by the order of operations. The use of any and all examples or exemplary terms (for example, "such as") provided herein is simply intended to describe the present disclosure in detail, and the scope of the present disclosure is not limited by the examples or exemplary terms unless otherwise claimed. In addition, it will be understood by those of ordinary skill in the art that various modifications, combinations and changes may be made according to design conditions and factors within the scope of the appended claims or equivalents thereof.

## Claims

1. A method for optimizing revolutions per minute (RPM) of a ship on a fixed route, the method comprising:
receiving input data including at least one of a route of the ship, sensor data of the ship, and weather data corresponding to a position where the ship is navigating on the route of the ship;
dividing the route into a plurality of optimization points including a departure point, at least one transit point, and an arrival point; and
calculating, based on the input data, an optimized RPM when moving from a first optimization point to a second optimization point where the ship is to move immediately after the first optimization point.

2. The method of claim 1, wherein the calculating of the optimized RPM comprises calculating an optimized RPM from an optimization point closest to a current position of the ship to the arrival point, based on the input data, whenever the weather data is updated.

3. The method of claim 1, wherein the calculating of the optimized RPM comprises, before the ship departs from the departure point, repeatedly calculating the optimized RPM for all optimization points included in the route.

4. The method of claim 1, wherein the optimized RPM is an RPM selected in a preset range of RPM in accordance with a certain selection criterion.

5. The method of claim 1, wherein, in the calculating of the optimized RPM, there are at least two times capable of reaching the second optimization point, and the optimized RPM is an RPM corresponding to a time selected from the at least two times.

6. The method of claim 1, wherein a time capable of reaching the second optimization point is divided into fixed time intervals.

7. The method of claim 1, wherein a time capable of reaching the second optimization point is divided into equal intervals.

8. The method of claim 1, wherein the calculating of the optimized RPM comprises selecting, as an optimized time, a reachable time that minimizes a value of an objective function among a plurality of reachable times for the second optimization point, and calculating the optimized RPM based on the optimized time.

9. The method of claim 1, wherein the weather data is automatically updated at preset time intervals or in response to a user request.

10. The method of claim 1, wherein the calculating of the optimized RPM comprises calculating the optimized RPM by additionally using a correlation between a cumulative movement distance of the ship on the route and estimated time of arrival (ETA) of the ship.

11. The method of claim 1, wherein the dividing into the plurality of optimization points comprises dividing the optimization points of the route at certain intervals.

12. The method of claim 1, wherein the dividing into the plurality of optimization points comprises dividing the optimization points of the route at equal intervals.

13. The method of claim 1, further comprising controlling the ship to navigate according to the calculated optimized RPM.

14. A computer-readable recording medium storing a program for performing the method according to claim 1.

15. A device for optimizing revolutions per minute (RPM) of a ship on a fixed route, the device comprising:
a memory in which at least one program is stored; and
a processor configured to execute the at least one program to perform an operation,
wherein the processor is further configured to:
receive input data including at least one of a route of the ship, sensor data of the ship, and weather data corresponding to a position where the ship is navigating on the route of the ship;
divide the route into a plurality of optimization points including a departure point, at least one transit point, and an arrival point; and
repeatedly calculate, based on the input data, an optimized estimated time of arrival (ETA) for each point, from the departure point or an optimization point closest to a current position of the ship to the arrival point, so as to calculate an optimized revolutions per minute (RPM) when moving from a first optimization point to a second optimization point where the ship is to be moved immediately after the first optimization point.
